Europäisches Patentamt

European Patent Office

Office européen des brevets

(11) Veröffentlichungsnummer: **0 477 605 A2**

# EUROPÄISCHE PATENTANMELDUNG

(21) Anmeldenummer: **91114860.9**

(22) Anmeldetag: **03.09.91**

(51) Int. Cl.5: **G02F 1/225**, G02F 1/313

(30) Priorität: **28.09.90 DE 4030755**

(43) Veröffentlichungstag der Anmeldung:
**01.04.92 Patentblatt 92/14**

(84) Benannte Vertragsstaaten:
**DE FR GB IT**

(71) Anmelder: **SIEMENS AKTIENGESELLSCHAFT**
**Wittelsbacherplatz 2**
**W-8000 München 2(DE)**

(72) Erfinder: **Müller, Gustav, Dr.**
**Feldmochinger Strasse 41d**
**W-8000 München 50(DE)**
Erfinder: **Stoll, Lothar, Dipl.-Ing.**
**Flössergasse 11a**
**W-8000 München 70(DE)**

(54) **Steuerbares integriert optisches Mach-Zehnder-Interferometer.**

(57) Integriert optisches Interferometer aus zwei auf einem Substrat integrierten Streifenwellenleitern, wobei in einem Phasenschieberabschnitt des Interferometers ein Steifenwellenleiterabschnitt als steuerbarer Streifenwellenleiter ausgebildet ist und außerhalb dieses Abschnitts die Streifenwellenleiter passive Streifenwellenleiter sind. Um eine weitgehend polarisationsabhängige Funktion dieses Interferometers und eines damit realisierten optischen Schalters zu gewährleisten, weisen die passiven Wellenleiter eine bestimmte andere Streifenwellenleiterstruktur als der steuerbare Streifenwellenleiter auf. Solche Strukturen sind angegeben.

FIG 1

EP 0 477 605 A2

Die Erfindung betrifft ein steuerbares integriert optisches Mach-Zehnder-Interferometer nach dem Oberbegriff des Patentanspruchs 1 und wie es in der älteren deutschen Patentanmeldung P 3929131.6 (GR 89 P 1730 DE) vorgeschlagen ist.

Bei dem vorgeschlagenen Interferometer erstreckt sich der pn- oder pin- Übergang über die ganze Länge der als Rippenwellenleiter ausgebildeten beiden Streifenwellenleiter. Diese Streifenwellenleiter weisen somit eine einheitliche Wellenleiterstruktur auf, wobei der pn- oder pin- Übergang nur im Phasenschieberschnitt über elektrische Kontakte elektrisch steuerbar ist.

Dieses Interferometer ist als optischer Schalter betreibbar, der ein optisches Eingangssignal in Abhängigkeit von einem elektrischen Steuersignal dem einen oder anderen Ausgang des Schalters zuführt.

Bei dem vorgeschlagenen Interferometer hängt die Funktion dieses Bauelements im allgemeinen von der Polarisation des Eingangssignals ab, d.h. bei gegebener Geometrie werden TE-polarisierte Eingangssignale anders auf die Ausgänge verteilt, als TM-polarisierte Eingangssignale.

Aufgabe der Erfindung ist es, ein Interferometer der genannten Art dahingehend zu verbessern, daß eine weitgehend polarisationsunabhängige Funktion dieses Interferometers und eines damit realisierten optischen Schalters gewährleistet ist.

Diese Aufgabe wird durch die im kennzeichnenden Teil des Patentanspruchs 1 angegebenen Merkmale gelöst.

Besonders vorteilhafte Ausgestaltungen des erfindungsgemäßen Interferometers gehen aus den Unteransprüchen hervor. Insbesondere haben die Streifenwellenleiterstrukturen der passiven Streifenwellenleiter den Vorteil, daß sie sich zur Integration mit der in der älteren deutschen Patentanmeldung P 40 14 234.5 (GR 90 P 1231 DE) beschriebenen Laserdiode eignen. Sie können über dies in einfacher Weise aus der Streifenwellenleiterstruktur des elektrisch steuerbaren Streifenwellenleiters durch Weglassen oder Abätzen oberer Schichten hergestellt werden.

Die Erfindung wird anhand der Figuren in der nachfolgenden Beschreibung beispielhaft näher erläutert. Es zeigen:

Figur 1
eine Draufsicht auf ein beispielhaftes erfindungsgemäßes Interferometer,

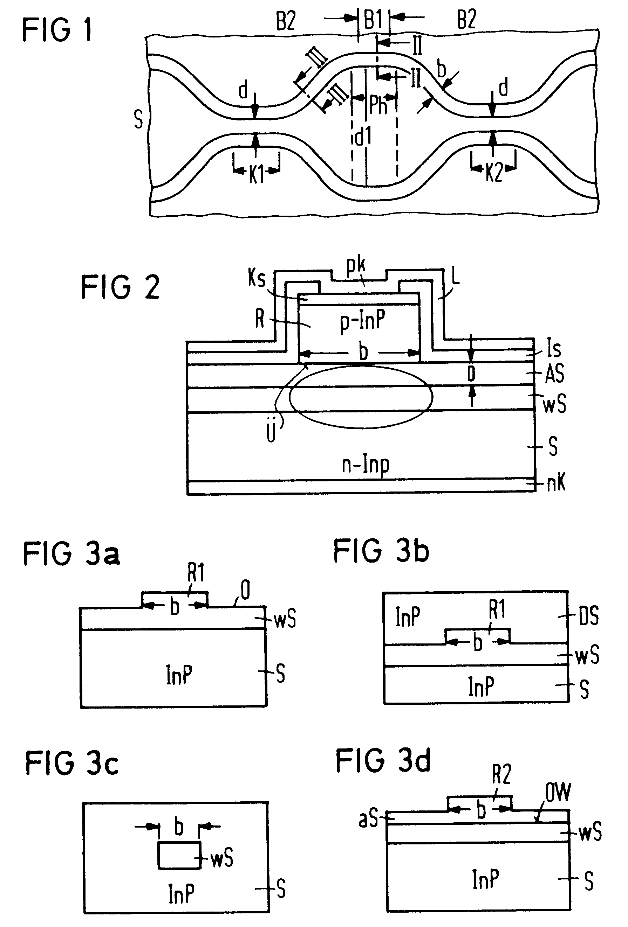

Figur 2
einen längs der Schnittlinie II-II in Figur 1 geführten Schnitt durch den elektrisch steuerbaren Streifenwellenleiter im Phasenschieberabschnitt, und

Figuren 3a bis 3d
jeweils einen beispielsweise längs der Schnittlinie III-III in Figur 1 geführten Querschnitt durch einen passiven Streifenwellenleiter des erfindungsgemäßen Interferometers, wobei verschiedene mögliche Streifenwellenleiterstrukturen für einen solchen passiven Streifenwellenleiter dargestellt sind.

Bei dem Interferometer nach Figur 1 sind die auf dem Substrat S integrierten Streifenwellenleiter WL1 und WL2 definierter Breite b im Phasenschieberabschnitt Ph in so großem Abstand d1 voneinander angeordnet, daß in diesem Phasenschieberabschnitt Ph eine in der wellenleitenden Schicht eines Streifenwellenleiters WL1 oder WL2 geführte optische Welle nicht in die wellenleitende Schicht des anderen Streifenwellenleiters WL2 bzw. WL1 überkoppelt.

Der den elektrisch steuerbaren Streifenwellenleiter bildende Streifenwellenleiterabschnitt eines Steifenwellenleiters WL1 oder WL2 befindet sich im Phasenschieberabschnitt Ph und erstreckt sich beispielsweise über den Bereich B1. Außerhalb des Bereiches B1, d.h. im Bereich B2 links und rechts vom Bereich B1 sind die Streifenwellenleiter WL1 und WL2 passive Streifenwellenleiter.

In zwei Koppelabschnitten K1 und K2 links und rechts vom Phasenschieberabschnitt Ph sind die Streifenwellenleiter WL1 und WL2 in einem so geringen Abstand d nebeneinander geführt, daß geführte optische Wellen in diesen Koppelabschnitten K1 und K2 zwischen den Streifenwellenleitern WL1 und WL2 überkoppeln können und einander überlagerbar sind.

Die Streifenwellenleiterstruktur des steuerbaren Streifenwellenleiters ist in der Figur 2 im Querschnitt dargestellt. Nach dieser Struktur ist auf einem Substrat S eine wellenleitende Schicht wS aufgebracht. Auf der wellenleitenden Schicht wS befindet sich eine Abstandsschicht AS der Dicke D, auf der wiederum die Rippe R aufgebracht ist, deren Breite b die Breite des Streifenwellenleiters definiert.

Das Substrat S besteht aus n-dotiertem Halbleitermaterial. Ebenso besteht die wellenleitende Schicht wS aus n-dotiertem Halbleitermaterial, wobei Material und/oder Dotierung dieser wellenleitenden Schicht wS so gewählt sind, daß ihre Brechzahl größer als die des Substrats S ist.

Die Abstandsschicht AS besteht aus n-dotiertem oder undotiertem Halbleitermaterial, das so gewählt ist, daß seine Brechzahl kleiner als die der wellenleitenden Schicht S ist.

Die Rippe R besteht aus p-dotiertem Halbleitermaterial.

Durch das n-dotierte Material des Substrats S und der wellenleitenden Schicht wS, das undotierte Material der Abstandsschicht AS und das p-dotierte Material der Rippe R ist ein pn-oder pin-Übergang definiert, bei dem der Übergang Ü von p-dotierten Material in Richtung zum n-dotierten oder undotierten Material im Abstand D von der wellenleitenden Schicht wS angeordnet ist.

Unter der Oberfläche der Rippe R befindet sich eine hoch p-dotierte Kontaktschicht, die mit einem metallischen Kontakt pK kontaktiert ist. Zu diesem Kontakt pK führende elektrische Leitungen L sind auf einer elektrisch isolierernden Schicht IS, beispielsweise einer Oxidschicht, zugeführt, die diese Leitungen L von der Abstandsschicht AS und der Rippe R trennt.

Der Gegenkontakt zum Kontakt pK ist auf der Unterseite des Substrats S aufgebracht und mit nK bezeichnet.

Das Substrat S und die Rippe R bestehen beispielsweise aus InP, während die wellenleitende Schicht wS und die Abstandsschicht AS aus In-GaASP bestehen, wobei das Material der Abstandsschicht AS eine Gap-Wellenlänge von 1,1 $\mu$m und das Material der wellenleitenden Schicht wS eine Gap-Wellenlänge von 1,25 $\mu$m haben können.

Die pn-oder pin- übergangsfreie Streifenwellenleiterstruktur der passiven Streifenwellenleiter kann verschieden aufgebaut sein.

Bei den Ausführungsformen nach Figur 3a und 3b ist diese Struktur durch eine einen dickeren Bereich der wellenleitenden Schicht wS aus dem n-dotierten oder undotierten Halbleitermaterial bildende Rippe R1, deren Breite b die Breite des passiven Streifenwellenleiters WL1 oder WL2 bestimmt, definiert, wobei die wellenleitende Schicht wS auf der vom Substrat S abgekehrten Oberseite O an Luft oder ein anderes einheitliches Material, beispielsweise das Material des Substrats S grenzt.

Bei der Ausführungsform nach Figur 3 b weist die Struktur eine streifenförmige wellenleitende Schicht wS auf, deren Breite b die Breite des passiven Streifenwellenleiters definiert, wobei diese streifenförmige wellenleitende Schicht wS vom einheitlichen Material des Substrats umgeben ist. Es kann aber auch so eingerichtet sein, daß beispielsweise die streifenförmige wellenleitende Schicht wS auf der Oberfläche des Substrats S ausgebildet und von einer Deckschicht aus einem einheitlichen Material abgedeckt ist oder frei bleibt. In diesem Fall grenzt an diese streifenförmige wellenleitende Schicht wS und das Substrat S Luft oder das andere einheitliche Material.

Bei der Ausführungsform nach Figur 3d ist die pn-und pinübergangsfreie Streifenwellenleiterstruktur durch eine einen dickeren Bereich einer auf oder über der wellenleitenden Schicht wS angeordneten weiteren Schicht aS aus einem einheitlichen Material bildende Rippe R2, deren Breite b die Breite des passiven Streifenwellenleiters WL1, WL2 bestimmt, definiert, wobei die weitere Schicht aS auf einer von der wellenleitenden Schicht wS abgekehrten Oberseite OW an Luft oder ein anderes einheitliches Material grenzt.

Der erfindungsgemäße Richtkoppler kann vorteilhafterweise so hergestellt werden, daß zunächst das Substrat S mit der wellenleitenden Schicht wS, der Abstandsschicht AS und der darauf angeordneten Rippe R in herkömmlicher Technologie hergestellt werden. Im Bereich B1 bleibt die Rippe R bestehen, wobei dort auch die Isolierschicht IS, der Kontakt pK und die elektrischen Leitungen L in herkömmlicher Technologie realisiert werden.

Im Bereich B2 wird zumindest die Rippe R entfernt, beispielsweise durch Ätzen. Es kann auch so vorgegangen werden, daß im Bereich B1 zwei keine Rippe R erzeugt wird, d.h., diese Rippe R in diesem Bereich B2 von vorneherein weggelassen wird.

Zur Herstellung der Streifenwellenleiterstrukturen nach den Figuren 3a bis 3c wird im Bereich B2 die Abstandsschicht AS entfernt, beispielsweise durch Ätzen. Es kann auch hier so vorgegangen werden, daß diese Abstandsschicht AS im Bereich B2 nicht erzeugt, d.h. von vorneherein weggelassen wird.

Die Rippe R1 der wellenleitenden Schicht WS wird durch dünner Ätzen dieser wellenleitenden Schicht wS außerhalb des Bereichs der Rippe R1 erzeugt.

Im Falle der Figur 3b wird nach dem Erzeugen der Rippe R1 eine Deckschicht DS auf die wellenleitende Schicht wS aufgebracht, beispielsweise durch Epitaxie. Diese Deckschicht DS kann beispielsweise aus dem gleichen Material wie das Substrat S bestehen.

Bei der Ausführungsform nach Figur 3c kann so vorgegangen werden, daß die flächige wellenleitende Schicht wS bis auf einen Streifen der Breite b abgeätzt wird. Es kann auch so vorgegangen werden, daß von vorneherein nur eine streifenförmige wellenleitende Schicht der Breite b erzeugt und damit die wellenleitende Schicht außerhalb dieses Streifens von vorneherein weggelassen wird. Die hergestellte streifenförmige wellenleitende Schicht wS wird mit einer Deckschicht abgedeckt, die beispielsweise aus dem Material des Substrats S bestehen und epitaktisch hergestellt werden kann. In der Figur 3c ist angenommen, daß Deckschicht und Substrat S aus dem gleichen Material bestehen, wobei die Grenze zwischen Deckschicht und Substrat fortgelassen ist. Die Deckschicht kann auch fortgelassen sein, so daß die streifenförmige wellenleitende Schicht wS dann oberhalb des Substats S an Luft grenzt.

Die Ausführungsform nach Figur 3d wird beispielsweise so hergestellt, daß die Abstandsschicht AS außerhalb des Bereichs der Rippe R dünner geätzt wird, wobei diese Schicht AS die weitere Schicht aS bildet.

## Patentansprüche

1. Steuerbares integriert optisches Mach-Zehnder-Interferometer aus zwei auf einem Substrat (S) aus Halbleitermaterial integrierten, durch eine undotierte oder n-dotierte wellenleitende Schicht (wS) des Substrats (S) definierte Streifenwellenleiter (WL1, WL2) definierter Breite (b), die in zwei voneinander getrennten Koppelabschnitten (K1, K2) in einem derart geringen Abstand (d) nebeneinander verlaufen, daß in diesen Koppelabschnitten (K1, K2) eine in der wellenleitenden Schicht (wS) eines Streifenwellenleiters (WL1) geführte optische Welle in die wellenleitende Schicht (wS) des anderen Streifenwellenleiters (WL2 bzw. WL1) überkoppeln kann und die in einem zwischen diesen beiden Koppelabschnitten (K1, K2) liegenden Phasenschieberbereich (Ph) in einem eine Überkopplung von optischen Wellen zwischen den Streifenwellenleitern (WL1, WL2) ausschließenden größeren Abstand (d1) nebeneinander verlaufen, wobei im Phasenschieberabschnitt (Ph) zumindest ein Streifenwellenleiter (WL1, WL2) eine über der wellenleitenden Schicht (wS) angeordnete und seine Breite (b) definierende Rippe (R) aus dem Halbleitermaterial aufweist, wobei im Bereich der Rippe (R) innerhalb des Phasenschieberabschnitts (Ph) ober- oder unterhalb der wellenleitenden Schicht (wS) ein über Kontakte elektrisch steuerbarer pn-oder pin-Übergang derart integriert ist, daß der Übergang (Ü) vom p-dotierten Material in Richtung zum n-dotierten oder oder undotierten Material in einem Abstand (D) von der wellenleitenden Schicht (wS) angeordnet ist und sich das p-dotierte Material auf der von dieser Schicht (wS) abgekehrten Seite dieses Übergangs (Ü) befindet, wobei ein einen elektrisch steuerbaren pn-oder pin-Übergang aufweisender Streifenwellenleiterabschnitt (in B1) ein elektrisch steuerbarer Streifenwellenleiter ist und jeder außerhalb des elektrisch steuerbaren Streifenwellenleiters befindlicher Streifenwellenleiterabschnitt (B2) oder Streifenwellenleiter einen passiven Streifenwellenleiter bildet,
dadurch **gekennzeichnet,**
daß ein passiver Streifenwellenleiter eine pn- und pin-übergangsfreie Streifenwellenleiterstruktur aufweist.

2. Interferrometer nach Anspruch 1,
dadurch **gekennzeichnet,**
daß eine pn- und pin- übergangsfreie Streifenwellenleiterstruktur durch eine einen dickeren Bereich der wellenleitenden Schicht (wS) aus dem n-dotierten oder undotierten Halbleitermaterial bildende Rippe (R1), deren Breite (b) die Breite des passiven Streifenwellenleiters (WL1, WL2) bestimmt, definiert, wobei die wellenleitende Schicht (wS) auf einer vom Substrat (S) abgekehrten Seite (O) an Luft oder ein anderes einheitliches Material grenzt.

3. Interferometer nach Anspruch 1,
dadurch **gekennzeichnet,**
daß eine pn- und pin- übergangsfreie Streifenwellenleiterstruktur eine streifenförmige wellenleitende Schicht (wS), deren Breite (b) die Breite des passiven Streifenwellenleiters definiert, aufweist, wobei diese streifenförmige wellenleitende Schicht (wS) vom einheitlichen Material des Substrats (S) umgeben ist oder an diese streifenförmige wellenleitende Schicht (wS) und das Substrat (S) Luft oder ein anderes einheitliches Material grenzt.

4. Interferometer nach Anspruch 1,
dadurch **gekennzeichnet,**
daß eine pn- und pin- übergangsfreie Streifenwellenleiterstruktur durch eine einen dickeren Bereich einer auf oder über der wellenleitenden Schicht (wS) angeordneten weiteren Schicht (aS) aus einem einheitlichen Material bildende Rippe (R2), deren Breite (b) die Breite des passiven Streifenwellenleiters bestimmt, definiert, wobei die weitere Schicht (aS) auf einer von der wellenleitenden Schicht (wS) abgekehrten Oberseite (OW) an Luft oder ein anderes einheitliches Material grenzt.

FIG 1

FIG 2

FIG 3a

FIG 3b

FIG 3c

FIG 3d